# EUROPÄISCHE PATENTSCHRIFT

(11) **EP 0 364 829 B1**
(45) Veröffentlichungstag und Bekanntmachung des Hinweises auf die Patenterteilung: **18.11.1993**
(21) Anmeldenummer: 89118537.3
(22) Anmeldetag: 06.10.1989
(51) Int. Cl.: B29C 67/14, B29B 15/12

(54) **Verbundwerkstoffe**
Composites
Matière composite

(30) Priorität: 19.10.1988 DE 3835575
(43) Veröffentlichungstag der Anmeldung: 25.04.1990
(73) Patentinhaber: BAYER AG, 51368 Leverkusen (DE)
(72) Erfinder: Goldmann, Gerd, Dr., D-4150 Krefeld 1 (DE); Lindner, Wolfgang, Dr., D-4047 Dormagen 1 (DE)

(56) Entgegenhaltungen:
- EP-A- 0 206 134
- FR-A- 1 539 577
- US-A- 3 993 726
- US-A- 4 588 538

## Beschreibung

Kontinuierliche Verfahren zur Herstellung von Verbundwerkstoffen wie endlosen Profilen, Bändern und flächigen Gebilden, bei denen endlose Fasern, beispielsweise Glasfaser-, Kohlenstoffaser- oder Aramidfaser-Rovings durch eine Schmelze eines thermoplastischen Kunststoffs gezogen werden, sind bekannt.

So wird in der EP-A 0 056 703 ein Verfahren beschrieben, bei dem Verstärkungsfaser-Rovings durch eine Schmelze eines thermoplastischen Kunststoffs gezogen werden, in die mindestens eine beheizte Oberfläche zum Spreizen des Rovings eintaucht. Die so hergestellten Werkstoffe sollen Longitudinal-Biegemoduln von mindestens 70 %, bevorzugt mindestens 90 % des theoretischen Wertes besitzen.

Praktisch sind immer mehrere Spreizvorrichtungen erforderlich. Die aufzubringenden Abzugskräfte steigen aber mit der Zahl der Spreizvorrichtungen (bei zylindrischen Spreizvorrichtungen mit steigenden Gesamtumschlingungswinkel), mit der Viskosität der Schmelze und mit der Abzugsgeschwindigkeit stark an. Da große Abzugskräfte die Verstärkungsfaser schädigen und damit die Eigenschaften des Verbundwerkstoffs verschlechern, ist das zur Verfügung stehende "Arbeitsfenster" sehr klein. Es kommt hinzu, daß die Imprägniergüte und damit auch die Qualität der Produkte (im Biegeversuch) mit steigender Viskosität der Schmelze und steigender Abzugsgeschwindigkeit abnehmen. Daher führt das Verfahren der EP-A 0 056 703 nur bei Viskositäten der Schmelze bis zu 30 Pas und bei niedrigen Abzugsgeschwindigkeiten (unter 0,3 m/min) zu guten Ergebnissen. Somit sind bei den meisten thermoplastischen Kunststoffen gerade die interessanten hochmolekularen und damit hochviskosen Typen ganz ausgeschlossen und im übrigen nur un wirtschaftlich niedrige Verarbeitungsgeschwindigkeiten möglich.

Rotierende Oberflächen zum Spreizen der Rovings verringern zwar Abzugskräfte, aber gebrochene Fasern, die in der Regel in den zugeführten Rovings enthalten sind, haften an den rotierenden Teilen und bauen sich dort auf, so daß der Imprägnierprozeß nach kurzer Zeit zum Erliegen kommt.

Die genannten Schwierigkeiten lassen sich auch nicht durch ein weiteres, ebenfalls bekanntes Verfahren vermeiden, bei dem der geschmolzene Thermoplast direkt in einen Spalt zwischen Verstärkungsfaser-Roving und Spreizeroberfläche gegeben wird.

Außerdem sind Verfahren bekannt, die mit Querspritzköpfen arbeiten, wie sie prinzipiell schon lange bei der Kabelummantelung verwendet werden. Dabei wird thermoplastisches Material aus einem Schmelzextruder auf einen Verstärkungsfaserstrang aufgebracht, der sich in der Regel senkrecht zur Fließrichtung der Schmelze bewegt. Solche Verfahren mit teilweise speziell modifizierten Werkzeugen werden in den US-PS 3 993 726, US-PS 4 588 538, EP 0 035 974 und EP 0 117 098 beschrieben.

In solchen Querspritzköpfen tritt aufgrund des Förderdruckes des Extruders in der Regel am Verstärkungsfaserstrang auf einer kurzen Strecke ein erhöhter Druck auf, der demnach nur kurzzeitig auf den Verstärkungsfaserstrang wirkt. Im Stand der Technik wird daher die Bedeutung des Druckes unterschiedlich bewertet: Während US-PS 3 993 726 von erforderlichem "hohem Druck" spricht, gebraucht US-PS 4 588 538 nur die Bezeichnung "unter Druck", EP-A 0 035 974 erwähnt dagegen eine fördernde Wirkung des Druckes im Querspritzkopf überhaupt nicht.

Es wurde gefunden, daß sich endlose, hochfeste Profile, Bänder und dünne, flächige Gebilde aus Verbundwerkstoffen mit einem thermoplastischen Kunststoff als Matrix und endlosen Verstärkungsfasern herstellen lassen, wenn man die Verstärkungsfasern bei erhöhtem Druck auf größerer, definierter Länge durch eine Schmelze des thermoplastischen Kunststoffs führt. Bei dieser Arbeitsweise ist es nicht erforderlich, die Fasern im Bad aufzuspreizen. Spreizvorrichtungen und entsprechende Einbauten sind daher nicht erforderlich.

Gegenstand der Erfindung ist somit ein Verfahren zur Herstellung von endlosen Formkörpern aus mit thermoplastischen Kunststoffen imprägnierten Gebilden aus Verstärkungsfasern, das dadurch gekennzeichnet ist, daß man ein Gebilde aus Verstärkungsfasern ohne Aufspreizen der Fasern auf einer Länge von mindestens 300 mm unter einem Druck von 1 bis 800 bar durch eine Schmelze des thermoplastischen Kunststoffs führt.

Bei diesem Verfahren bleiben die Abzugskräfte niedrig, so daß die Verstärkungsfasern schonend behandelt werden. Hohe Abzugsgeschwindigkeiten werden erreicht. Wegen des Fehlens von Einbauten kann das Imprägnierbad sehr lang sein, so daß auch bei hohen Abzugsgeschwindigkeiten ausreichende Verweilzeit und damit ausreichende Imprägniergüte und gute mechanische Eigenschaften erreicht werden. Der im Imprägnierbad herrschende Überdruck von 1 bis 800 bar, bevorzugt 10 bis 200 bar, auf einer Länge von mindestens 300 mm gewährleistet eine allseitige faserschonende Imprägnierung.

Die anzuwendenden Bedingungen hinsichtlich Druck und Länge hängen von Titer und Aufbau des zu imprägnierenden Verstärkungsfasergebildes ab, das im folgenden näher spezifiziert wird. Es ist sofort einleuchtend, daß ein dünner, ungedrehter Faserroving bei niedrigerem Druck und/oder kürzerer Länge der Druckzone imprägniert werden kann als beispielsweise ein schweres Verstärkungsfaser-Gewebe.

Erfindungsgemäß kann man auch thermoplastische Kunststoffe mit hohen Schmelzviskositäten verarbeiten. Damit kann man prinzipiell alle thermoplastischen Kunststoffe verwenden. Bevorzugt sind jedoch solche mit Schmelzviskositäten bei Verarbeitungstemperatur unter 500 Pas, besonders solche mit Schmelzviskositäten unter 200 Pas.

Wesentlich ist, daß der Thermoplast ein niedrigeres Erweichungsintervall bzw. Schmelzpunkt besitzt als das Material, aus dem die Verstärkungsfasern bestehen. In Frage kommen beispielsweise Thermoplaste im weitesten Sinne, d.h. Stoffe, die sich reversibel oder intermediär thermoplastisch verhalten, z.B. thermoplastische Kunststoffe und thermoplastische Phasen von Duromeren. Beispiele für Thermoplaste sind Polyolefine, Vinylpolymerisate wie Polyvinylhalogenide, Polyvinylester, Polyvinylether, Polyacrylate, Polymethacrylate und organische Celluloseester, sowie Polyamide, Polyurethane, Polyharnstoffe, Polyimide, Polyester, Polyether, Polystyrole, Polyhydantoine, Polyphenylenoxide, Polyphenylensulfide, Polysulfone, Polycarbonate, Phenolharzvorläufer, Furanharzvorläufer, Melaminharzvorläufer, Epoxiharzvorläufer, Verbindungen mit polymerisations-und/oder polyadditionsfähigen Doppelbindungen, Polyimidvorläufer, Polyetherketone, Polyetheretherketone, Polyethersulfone, Polyetherimide, Polyamidimide, Polyfluoralkene, Polyestercarbonate und Liquid-crystal-Polymere; ferner unpolare thermoplastische Polymere (z.B. Polyolefine), denen polare Gruppen aufgepfropft wurden.

Bevorzugte Thermoplaste sind Polyethylene, Polypropylene, Polybutylene, Polypentene, Polyvinylchloride, Polymethylmethacrylate, Polyacrylnitrile, Polymethacrylnitrile, Polystyrol enthaltende Mehrphasenkunststoffe wie ABS, Polyamide des Typs 6, Polyamide des Typs 6-6, Polyurethane, Polyethylenterephthalate, Polybutylenterephthalate, Bisphenol-A-Polycarbonate, Polyphenylensulfide, Polyetherketone, Polyetheretherketone, Polyethersulfone, Polysulfone, Polyetherimide, Polyamidimide, Polyestercarbonate, Liquid-crystal-Polymere und Polypropylen, dem polare Gruppen aufgepfropft wurden.

Die Thermoplaste können auch in den verschiedensten Kombinationen vorliegen, z.B. als Copolymere, Blockpolymere, Pfropfpolymere, Mischpolymere und Polymergemische.

Der chemische Aufbau der Verstärkungsfasern und des Thermoplasts kann auch gleichartig sein, z.B. können beide aus Polyester bestehen. Wesentlich ist aber auch in diesem Fall, daß das Material, aus dem die Verstärkungsfasern bestehen ein höheres Erweichungsintervall bzw. Schmelzpunkt hat als das Material, aus dem die Thermoplastmatrix besteht.

Nach dem Verfahren können auch Harzsysteme verarbeitet werden, die nach der Imprägnierung in einem weiteren Schritt einer Vernetzung unterzogen werden, wie Duroplast- oder Elastomersysteme. Die Anwendung von Druck ist hier vorteilhaft, weil eine bessere Imprägnierung bzw. höhere Produktionsgeschwindigkeiten und längere Topfzeiten erreicht werden, weil eine Verarbeitung bei höheren Viskositäten möglich ist. Das Wort "Thermoplast" ist dann im Text sinngemäß durch das Wort "härtbare Harzsysteme" zu ersetzen.

Erfindungsgemäß können auch sehr spröde Fasern, z.B. Hochmodulcarbonfasern, eingesetzt werden, weil durch das Fehlen von Einbauten die Fasern nicht gebogen und umgelenkt werden müssen.

Der chemische Aufbau der Verstärkungsfasern kann von der unterschiedlichsten Art sein. Wesentlich ist nur, daß die Verstärkungsfasern einen höheren Erweichungs- bzw. Schmelzpunkt besitzen, als die jeweils vorliegende Thermoplastmatrix. Beispiele für Fasermaterialien sind anorganische Materialien wie silikatische und nichtsilikatische Gläser der verschiedensten Art, Kohlenstoff, Bor, Siliciumcarbid, Metalle, Metallegierungen, Metalloxide, Metallnitride, Metallcarbide und Silikate, sowie organische Materialien wie natürliche und synthetische Polymere, beispielsweise Polyacrylnitrile, Polyester, ultrahochgereckte Polyolefinfasern, Polyamide, Polyimide, Aramide, Liquid-crystal-Polymere, Polyphenylensulfide, Polyetherketone, Polyetheretherketone, Polyetherimide, Baumwolle und Cellulose. Bevorzugt sind hochschmelzende Materialien, beispielsweise Gläser, Kohlenstoff, Aramide, Liquid-crystal-Polymere, Polyphenylensulfide, Polyetherketone, Polyetheretherketone und Polyetherimide.

Die Verstärkungsfasern können in dem erfindungsgemäßen Leichtverbundwerkstoff gleichmäßig verteilt sein, sie können jedoch auch in bestimmten Teilen des Werkstoffs, z.B. in den Randbereichen und/oder besonderen Verstärkungszonen, in einem größeren Anteil vorhanden sein als in anderen Teilen des Werkstoffes.

Erfindungsgemäß können außer Rovings der Verstärkungsfasern auch andere lineare Formkörper wie Fasern, Garne, Zwirne, Seile und textile Gebilde, wie Gewebe, Gewirke, Gestricke, Geflechte, zu Verbundwerkstoffen mit guten mechanischen Eigenschaften verarbeitet werden.

Durch die erfindungsgemäß niedrigen Abzugskräfte wird die Verarbeitung von textilen Gebilden möglich, die in Zugrichtung dehnfähig sind, beispielsweise Gewirke, Gestricke und Geflechte.

Der Gehalt an Verstärkungsfasern im fertigen Erzeugnis ist allgemein 20 bis 85 Vol-%, bevorzugt 40 - 70 Vol-%, bei Profilen mit rein unidirektionaler Verstärkung bei 30 bis 90 Vol%, bevorzugt 40 - 80 Vol %.

Ein weiterer Vorteil des erfindungsgemäßen Verfahrens liegt in der Möglichkeit einer faserschonenden Ausformung des Profils in der Formdüse. Die Düse kann nämlich so gestaltet werden, daß sie den Druckraum direkt nach außen abschließt, so daß die Druckdifferenz zwischen dem Schmelzebad und der Umgebung längs der Düsenlänge abgebaut wird. Dadurch wird schmelzflüssiges Polymeres zwischen die Oberfläche des Bandes und die Düse gedrückt und somit Oberflächenreibung der Verstärkungsfaserfilamente an der Düse vermieden oder zumindest stark reduziert.

Die geometrische Form und die Abmessungen der Düse können in weiten Grenzen variiert werden, so daß Verbundwerkstoffprofile oder -bänder mit verschiedenen Formen und Abmessungen hergestellt werden können. Bevorzugt sind Rundprofile mit Durchmessern bis 30 mm, bevorzugt 18 mm, und Rechteckprofile mit Breiten bis zu 2500 mm und mit Dicken bis zu 10 mm. Besonders bevorzugt sind dünne Bänder mit Dicken bis zu 1 mm.

Das Verstärkungsfasergebilde kann auf verschiedene Weise in den Schmelzeraum eingeführt werden. Beispielsweise kann es durch eine Düse mit engem Spiel eingezogen werden. Bevorzugt wird das Fasergebilde durch einen Spalt ohne Wandberührung in den Schmelzeraum eingeführt. Die Druckdifferenz wird dabei durch die Konvektionsströmung oder Schleppströmung, die durch die Haftung des Polymeren auf dem sich bewegenden Band entsteht, überwunden.

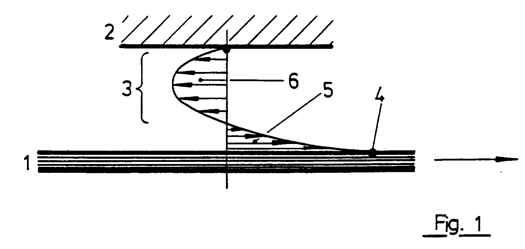

Fig. 1 zeigt einen solchen Spalt (3) zwischen dem sich bewegenden Band (1) und der festen Wand (2). Durch die Haftung hat das Polymere an der Oberfläche des Bandes (1) dieselbe Geschwindigkeit wie das Band selbst. Dabei entsteht in Bandnähe eine Konvektionsströmung oder Schleppströmung in Bandrichtung (5) und in Wandnähe aufgrund der Kontinuitätsgleichung eine Strömung in Gegenrichtung (Leckströmung) (6). Wann im Hochdruckraum weder Polymeres zugeführt noch abgeführt wird, müssen die in beiden Richtungen strömenden Mengen genau gleich sein.

Die Abtrennung von Hoch- und Niederdruckraum ist keine Dichtung im eigentlichen Sinn. Die Strömung im Spalt bestimmt vielmehr den Druck im eigentlichen Hochdruckraum. Die sich einstellende Druckdifferenz hängt von den geometrischen Abmessungen (Spaltbreite, Banddicke, Spaltlänge) sowie von der Viskosität des Mediums, der Bandgeschwindigkeit und einem evtl. überlagertem Gesamtmengenstrom ab. Ein Computerprogramm, das auf die entsprechenden Gleichungen der laminaren Strömung aufbaut, gestattet die Berechnung der jeweiligen Druckdifferenz.

Ein besonderer Vorteil der Anordnung ist ein Ansteigen des Druckes und damit der Imprägniergüte mit steigender Bandgeschwindigkeit und steigender Viskosiät, d.h. für die Fälle, in denen die Imprägnierung schwieriger wird. Ein freier Parameter zur Einstellung des Druckes ist eine Überschuß-Polymermenge, die beispielsweise mit einem Extruder oder einer Pumpe in den Hochdruckraum eingeleitet wird und die durch den Spalt (3) in Gegenrichtung (6) strömt.

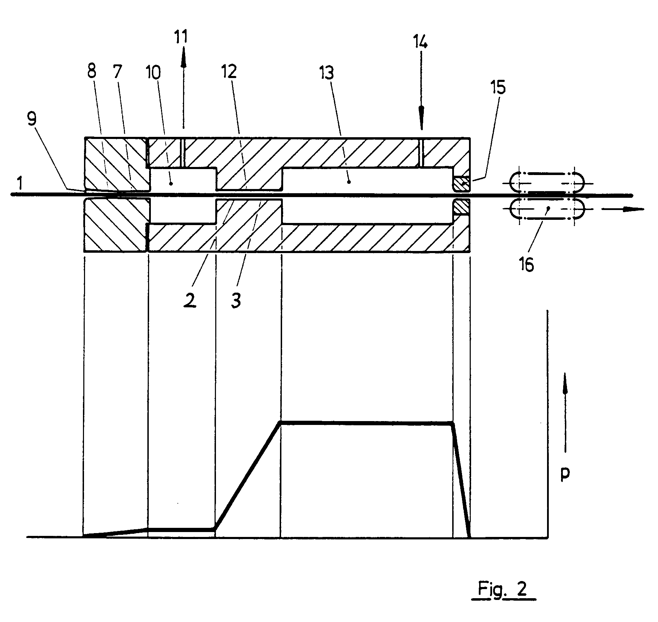

Fig. 2 zeigt eine Vorrichtung zur Durchführung des erfindungsgemäßen Verfahrens mit dem Hochdruckraum (13), dem Dichtungsspalt (12) und der Formdüse (15) und dem Abzug (16), der das Verstärkungsfaser-Gebilde (1) durch die gesamte Einheit zieht. Dieses Gebilde (1) durchläuft zunächst einen vollständig mit Schmelze gefüllten Raum (10), der unter Atmosphärendruck oder leichtem Überdruck von maximal 0,5 bar steht. Leitung (11) sorgt für die Entlüftung und Ableitung einer möglicherweise eingesetzten Überschuß-Polymermenge. Die Einlaufdüse (7/8) besteht bevorzugt aus einem zylindrischen Teil (7) mit geringem Spiel zwischen Faserband (1) und Wand und einem konischen Teil (8). Bei leichtem Überdruck in Raum (10) wird die Düse zumindest teilweise mit Polymerschmelze gefüllt, so daß die den Roving umgebende Luft abgequetscht wird.

In Fig. 2 ist zusätzlich das Druckprofil längs der beschriebenen technischen Einrichtung schematisch angedeutet.

Danach wird das Faserband durch den in Fig. 1 beschriebenen Spalt (12) in den Hochdruckraum (13) gezogen. In (12/13) erfolgt die eigentliche Imprägnierung des Fasergebildes mit dem Thermoplasten. Anschließend gibt die Formdüse (15) dem Profil seine endgültige äußere Gestalt. In der Regel wird mit einem leichten rezirkulierbaren Polymerüberschuß gearbeitet, um die Konzentration an gelöster Luft im Hochdruckraum (13) zu kontrollieren. Die in der Regel mit Hilfe eines Extruders oder einer Pumpe, beispielsweise einer Zahnradpumpe, bevorzugt durch Leitung (14) zugegebenen Polymermengen liegen bei weniger als dem fünffachen, bevorzugt zweifachen der mit dem fertigen Verbundwerkstoff ausgetragenen Polymermenge. Der Überschuß wird durch den Dichtungsspalt (12) geleitet und durch den Überlauf (11) ausgetragen, wo durch Drosselung der leichte Überdruck im Raum (10) eingestellt wird.

Der Wandabstand des Bandes im Hochdruckraum (13) kann so bemessen werden, daß in Abzugsrichtung keine weitere nennenswerte Druckerhöhung auftritt. Wenn bei empf indlichen Polymeren geringe Polymer-Verweilzeiten angestrebt werden, empfiehlt sich jedoch eine wandnahe Führung des Verstärkungsfaserbandes. Dadurch kann eine weitere kalkulierbare Druckerhöhung längs des Hochdruckraumes auftreten. Im Grenzfall können Dichtungsspalt (12) und Hochdruckraum (13) die gleiche Spaltweite aufweisen. Dann steigt der Druck zwischen dem Raum (10) und der Formdüse (15) linear an (isothermes Verhalten vorausgesetzt).

Die Form der Querschnittsfläche des Dichtungsspaltes (12) richtet sich nach der Geometrie des Erzeugnisses. Sie wird bevorzugt so gestaltet, daß ein gleichmäßiger Dichtspalt zwischen dem Verstärkungsfaser-Gebilde und der Wand entsteht. Allerdings können auch Asymmetrien zwischen Faserband und Spalt vorteilhaft sein, beispielsweise, wenn Faserbruch, Schmutzpartikel u.ä. mit dem Leckstrom (6) durch Leitung (11) ausgetragen werden soll. Dazu sind auch spezielle Kanäle auf einer Seite oder beiden Seiten des Bandes denkbar. Bei schmalen Bändern kann beispielsweise die Verwendung einer zylindrischen Bohrung vorteilhaft sein.

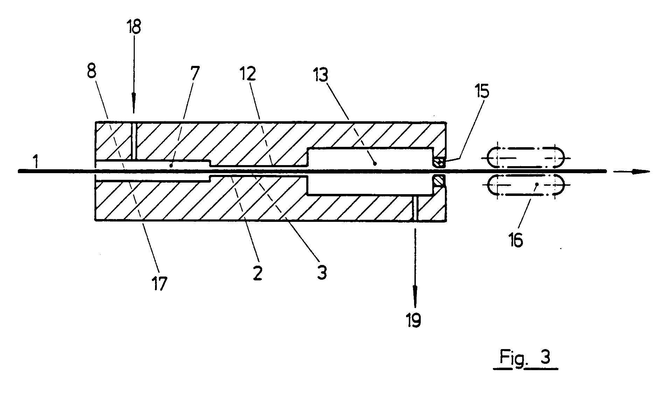

Fig. 3 zeigt eine weitere bevorzugte Vorrichtung zur Durchführung des erfindungsgemäßen Verfahrens. Hier wird die Thermoplastschmelze an der Stelle (18) zugegeben und im Gleichstrom mit dem Band geführt. Der Einlaufkanal (17) kann dabei die gleiche Spaltweite wie der Dichtspalt (12) haben. Er kann aber auch breiter ausgebildet sein. Um eine Vorverteilung der Schmelze im Verstärkungsfaser-Gebilde zu erhalten, kann der Kanal (17) auch gewellt sein oder Einbauten, beispielsweise in Form von Zylindern oder Zylinderausschnitten enthalten. Da das Verstärkungsfaser-Gebilde (1) bereits in der Breite einläuft, die dem Erzeugnis entspricht, haben diese Einbauten keine breithaltende Wirkung.

Die Thermoplastschmelze wird durch genau arbeitende Dosierorgane, beispielsweise Spinnpumpen, so dosiert zugeführt, daß die Überschußmengen klein bleiben. Überschüsse werden bevorzugt durch die Einlaufdüse (7/8) entfernt, können aber auch mit Hilfe eines Überdruckventils auf dem Weg (19) aus dem Hochdruckraum entnommen werden.

Die Schmelzeaufgabe durch die schematisch angedeuteten Leitungen (14) oder (18) kann konstruktiv so ausgeführt werden, daß die Schmelze rotationssymmetrisch am Umfang zugegeben wird. Bevorzugte Ausführungsform ist eine von einem Extruder gespeiste Düse, die vom Faserband entweder zentral oder - beispielsweise bei Verwendung von Rovings - in einem Ringspalt auf dem Umfang durchlaufen wird.

Die gesamten Vorrichtungen nach Fig. 2 und Fig. 3 werden durch eine Beheizung auf der gewünschten Verarbeitungstemperatur gehalten. Bevorzugt ist dabei eine Aufteilung in mindestens vier unabhängige Beheizungszonen, die die Einlaufdüse (7/8) und den Raum (10) sowie den Spalt (12) sowie den Hochdruckraum (13) sowie die Formdüse (15) umfassen.

Dabei ist insbesondere die Temperatur, auf der der Dichtungsspalt (12) gehalten wird von Bedeutung für das Verfahren. In der Regel wird man anstreben, die Temperatur im Hochdruckraum (13) möglichst hoch zu halten, so daß die Viskosität zur Imprägnierung des Verstärkungsfaser-Gebildes möglichst niedrig bleibt. Da die längs des Dichtungsspaltes erzeugte Druckdifferenz aber proportional zur Viskosität des Thermoplasten verläuft, ist hier eine Temperatur günstig, die möglichst nahe an der Schmelztemperatur des Thermoplasten liegt.

Wichtig ist auch eine unabhängige Einstellmöglichkeit für die Temperatur der Formdüse (15), wobei zusätzlich in unterschiedliche Heizzonen unterteilt werden kann. Durch eine niedrige Düsenaustrittstemperatur, die bevorzugt unter der Schmelztemperatur des Thermoplasten liegt, ist die Einstellung eines gut geformten Stranges unter faserschonenden Bedingungen möglich. Nach dem Austritt aus der Formdüse kann der Strang beispielsweise durch Kühlen mit einem Temperaturprogramm oder durch Glätten mit einem Walzwerk nachbehandelt werden.

Eine andere wichtige Möglichkeit zur Reduzierung der Viskosität bei der Imprägnierung des Faser-Gebildes ist das Aufbringen hoher Schubspannungen im Dichtungsspalt 3, wodurch bei strukturviskosen Stoffen die Viskosität erniedrigt wird. Wie aus Fig. 1 ersichtlich, tritt die höchste Schubspannung und damit die höchste Viskositätserniedrigung ganau im Punkt 4 an der Bandoberfläche auf, wo das Polymere in das Band eindringen soll.

Eine solche Viskositätserniedrigung in Abhängigkeit vom Schergefälle ist eine prinzipielle Eigenschaft von geschmolzenen Polymeren. Besonders voreilhaft ist das Verfahren dann, wenn die Imprägnierung mit Polymeren erfolgt, die eine starke Abhängigkeit der Viskosität vom Schergefälle aufweisen, beispielsweise Liquid-Crystal-Polymere oder Acrylnitril-Butadien-Styrol-Polymere (ABS).

Bei der Imprägnierung von einem oder mehreren Verstärkungsfaser-Rovings werden die Rovings (1) vor Eintritt in die Einlaufdüse (8/9) bevorzugt zu einem flachen, breiten Band gelegt, wodurch die Imprägnierung erleichtert wird.

Gleichzeitig erfolgt bevorzugt eine Vorbehandlung des Rovings zur Vereinzelung der Filamente, beispielsweise durch mechanisches Aufbrechen der Schlichte, thermische Behandlung oder Ultraschallanwendung.

Bei allen einzusetzenden Verstärkungsfaser-Gebilden erweist sich eine Vorheizung vor Eintritt in die Einlaufdüse (8/9) als vorteilhaft. Außerdem muß vor Eintritt in die Einlaufdüse eine definierte Warenspannung vorgegeben werden, die beim Einsatz von Rovings, bevorzugt beim Legen des erwähnten flachen, breiten Bandes, beim Einsatz von Textilien, beispielsweise direkt beim Abzug von den Vorratsrollen, erfolgen kann.

Daraus ergibt sich, daß in der Imprägniereinheit selbst keinerlei Stifte zum Breithalten der Verstärkungsfaser-Gebilde erforderlich sind. Beim Roving-Imprägnieren kann die Breite des dem Dichtspalt (8/9) zulaufenden Bandes die Breite der Formdüse (15) übertreffen oder mit der Breite der Düse übereinstimmen.

Zur Unterstützung der Imprägnierung kann insbesondere bei höherviskosen Thermoplasten eine Anordnung von zusätzlichen Imprägnierhilfen, auf denen das Verstärkungsfaser-Gebilde über einen sich bildenden Polymerfilm gleitet, vorteilhaft sein. Solche Imprägnierhilfen, die beispielsweise ganz oder teilweise aus Zylindern mit kreisförmiger oder elliptischer Grundfläche bestehen, haben keinerlei Funktion zum Breithalten des Bandes und sind nur bei Viskositäten über 30 Pas erforderlich, wo andere Imprägniereinrichtungen aus den erwähnten Gründen versagen.

### Beispiel 1

Unter verschiedenen vereinfachenden Annahmen (z.B. Strömung newtonisch, reibungsfrei) lassen sich Strömungsprofil und Druckaufbau im Dichtspalt 3 berechnen.

Für ein undirektional verstärktes Randprofil mit dem Durchmesser d, das mit der Geschwindigkeit w in einem kreisrunden Kanal mit dem Durchmesser D läuft, ergeben sich folgende Druckerhöhungen Δp in bar/cm Spaltlänge in einem Medium mit der Viskosität η bei einer zusätzlichen Rückströmrate V̇ in l/h:
d = 186 mm; D = 4 mm; V̇ = 0,5 l/h

| η Pas | w m/min | Δp bar/cm |
|---|---|---|
| 10 | 5 | 0,4 |
| 100 | 5 | 3,6 |
| 400 | 5 | 14,5 |
| 700 | 5 | 25,4 |
| 700 | 10 | 50,8 |
| 700 | 20 | 101,7 |

d = 186 mm; η = 100 Pas; w = 10 m/min

| D mm | V̇ l/h | p bar/cm |
|---|---|---|
| 3 | 0,5 | 32,0 |
| 4 | 0,5 | 7,3 |
| 5 | 0,5 | 2,7 |
| 4 | 1,0 | 8,8 |
| 4 | 0,0 | 5,8 |

Man erkennt den hohen Einfluß der weitgehend frei wählbaren Spaltweite.

### Beispiel 2

Für ein Band mit Rechteckquerschnitt, das einen Spalt gleicher Querschnittsform zentral durchläuft, ist der Abstand s zwischen Band und Spalt die kennzeichnende Größe. Unter Vernachlässigung der Randzonen ergibt sich für den Druckaufbau:
η = 30 Pas; w = 10 m/min

| s mm | V̇ l/h | p bar/cm |
|---|---|---|
| 0,125 | 0,01 | 731 |
| | 0,05 | 814 |
| | 0,1 | 918 |
| | 0,25 | 1230 |
| | 0,5 | 1750 |
| 0,2 | 0,01 | 155 |
| | 0,05 | 163 |
| | 0,1 | 174 |
| | 0,25 | 205 |
| | 0,5 | 257 |
| 0,25 | 0,01 | 84 |
| | 0,05 | 87 |
| | 0,1 | 91 |
| | 0,25 | 104 |
| | 0,5 | 125 |

Man erkennt die gute Einstellmöglichkeit von Δp über die Spaltweite und die Leckströmungsmenge.

### Beispiel 3

Bei bekanntem Strömungsprofil ist die Berechnung des Schergefälles ν an der Oberfläche des transportierten Bandes 1 möglich (Annahmen s. Beispiel 1). Dabei können hohe Schergefälle eingestellt werden, die bei stark strukturviskosen Kunststoffen (wie thermotrope Liquid-Crystal-Polymere) zu einer Erniedrigung der Viskosität an der Bandoberfläche und somit zu einer verbesserten Penetration des Verstärkungsfaser-Gebildes führen.

| s mm | V̇ l/h | w m/min | ν 1/s |
|---|---|---|---|
| 0,125 | 0,01 | 10 | 10 450 |
| | 0,1 | 10 | 12 470 |
| | 0,5 | 10 | 21 450 |
| | 0,5 | 20 | 31 680 |
| 0,2 | 0,01 | 10 | 4 800 |
| | 0,1 | 10 | 5 230 |
| | 0,5 | 10 | 7 170 |
| | 0,5 | 20 | 11 920 |
| 0,25 | 0,01 | 10 | 3 520 |
| | 0,1 | 10 | 3 760 |
| | 0,5 | 10 | 4 810 |
| | 0,5 | 20 | 8 310 |

### Beispiel 4

Ein Verbundwerkstoff-Profil wird dadurch hergestellt, daß ein Glasfaserroving 2400 tex (Filamentdurchmesser 10 µm) mit Polyamid 6 (Bayer ®Durethan B 30 S) imprägniert wird. Die Imprägniertemperatur beträgt 290°C. Bei dieser Temperatur liegt die Viskosität bei 135 Pas (Schergefälle ν = 10/s).

Der Glasfaserroving wird als flaches Band von 17,5 mm Breite mit einer Geschwindigkeit von w = 10 m/min durch einen Spalt mit einer Spaltweite von 1 mm und einer Breite von 18 mm gezogen. Das Glasfaserband hat eine Dicke von ca. 120 µm, so daß sich für den Abstand zwischen Faserband und Wand ein Maß von ca. 0,44 mm ergibt. Die Spaltlänge beträgt 100 mm, die Rückströmmenge V = 0,5 l/h.

Unter den Annahmen von Beispiel 1 ergibt sich ein rechnerischer Druckaufbau von Δp = 186 bar. Mit Hilfe eines Druckaufnehmers wird ein Wert von Δp = 150 bar gemessen.

Mit Hilfe einer Luftkühlung wird der Spaltbereich auf eine Temperatur von ca. 240°C abgekühlt, während die eigentliche Hochdruck-Imprägnierstrecke bei 290°C bleibt. Dabei steigt der Druck erheblich, es wird ein Wert um Δp = 330 bar gemessen.

### Beispiel 5

Ein Verbundwerkstoff-Flachprofil wird dadurch hergestellt, daß ein Kohlenstoffaser-Band mit 24 000 Fasern mit einem Filamentdurchmesser von 7 µm entsprechend 1600 tex durch eine Schmelze von Polyphenylensulfid (Bayer ®Tedur) gezogen wird. Die verwendete Species hat bei der Imprägniertemperatur von 320°C eine Schmelze-Viskosität von 25 Pas.

Das Band wird in 17,5 mm Breite mit einer Geschwindigkeit von w = 10 m/min durch einen Spalt mit einer Spaltweite von 0,5 mm und einer Breite von 18 mm gezogen. Für den Abstand zwischen Kohlenstoffaserband und Wand ergibt sich ein Maß von ca. 0,19 mm. Die Spaltlänge beträgt 100 mm, die Rückströmmenge V = 0,5 l/h. Unter den Annahmen von Beispiel 1 ergibt sich ein rechnerischer Druckaufbau von Δp = 156 bar. Gemessen wird Δp = 150 bar.

### Beispiel 6

Ein Verbundwerkstoff-Flachprofil wird dadurch hergestellt, daß ein Kohlenstoffaserband (C-Faser von Beispiel 5) durch eine Schmelze von thermotropem Liquid-Crystal-Polymer (Bayer-Versuchsprodukt KU 1 - 9231) gezogen wird. Die Viskosität der strukturviskosen Schmelze hat bei 350°C bei einer Schergeschwindigkeit von ν = 10/s den Wert η = 530 Pas, bei ν = 1000/s den Wert η = 90 Pas.

Das Band wird in 17,5 mm Breite mit einer Geschwindigkeit von w = 10 m/min durch einen Spalt von 1 mm Spaltweite und 18 mm Breite gezogen. Die Spaltlänge beträgt 100 mm, die Rückströmmenge V̇ = 0,5 l/h.

Es wird eine Druckerhöhung von Δp = 185 bar gemessen. Rechnerisch ergibt sich an der Bandoberfläche ein Schergefälle von ν = 870/s und damit eine Viskositätserniedrigung auf 17,7 % des Wertes bei ν = 10/s. Dadurch wird die Imprägniergüte erheblich verbessert.

## Patentansprüche

1. Verfahren zur Herstellung von endlosen Formkörpern aus mit thermoplastischen Kunststoffen imprägnierten endlosen Gebilden aus Verstärkungsfasern, dadurch gekennzeichnet, daß man das Gebilde aus Verstärkungsfasern ohne Aufspreizen der Fasern unter Aufrechterhaltung eines Drucks von 1 bis 800 bar über eine Wegstrecke von mindestens 300 mm durch eine Schmelze des Thermoplasten führt.

2. Verfahren nach Anspruch 1, dadurch gekennzeichnet, daß die mit thermoplastischen Kunststoffen imprägnierten Gebilde Bänder, dünne Flächengebilde oder Profile aus Verbundwerkstoffen, aus thermoplastischen Kunststoffen und Verstärkungsfasern sind.

3. Verfahren nach Anspruch 1, dadurch gekennzeichnet, daß die Gebilde aus Verstärkungsfasern Rovings, Garne, Zwirne, Seile oder textile Gebilde (Gewebe, Gewirke, Gestricke) sind.

4. Verfahren nach Anspruch 1, dadurch gekennzeichnet, daß die Gebilde aus Verstärkungsfasern Textilien mit unidirektionaler, orthotroper oder multiaxialer Ausrichtung der Verstärkungsfasern sind, die durch thermoplastische Bindefäden zusammengehalten werden.

5. Vorrichtung zur Durchführung des Verfahrens nach Anspruch 1, aus einem Hochdruckraum (13), einem Dichtungsspalt (12) zur Einführung eines Fasergebildes, einer Formdüse (15) und einem Abzug (16) zum Austragen des endlosen Formkörpers, wobei der Dichtungsspalt (12) mit einem vollständig mit Schmelze gefüllten Raum (10), der unter Atmosphärendruck oder leichtem Überdruck steht, verbunden ist, und wobei ferner durch Leitung (14) Polymer unter Druck zugegeben, durch Leitung (11) überschüssiges Polymer entfernt wird, worin das Fasergebilde durch den Spalt (12) in den Hochdruckraum (13) eingeführt wird und der Spalt (12) durch eine Schleppströmung der Polymerisatschmelze abgedichtet wird.

## Claims

1. Process for the preparation of continuous moulded bodies from thermoplastics-impregnated continuous formed bodies of reinforcement fibres, characterised in that the formed body of reinforcement fibres is guided through a melt of the thermoplastic, without spreading of the fibres and with a pressure of from 1 to 800 bar maintained over a distance of at least 300 mm.

2. Process according to Claim 1, characterised in that the thermoplastics-impregnated formed bodies are tapes, thin sheet formed bodies or profiles comprising composites, thermoplastics and reinforcement fibres.

3. Process according to Claim 1, characterised in that the formed bodies of reinforcement fibres are rovings, yarns, twisted yarns, ropes or textile formed bodies (wovens, knits).

4. Process according to Claim 1, characterised in that the formed bodies of reinforcement fibres are textiles having unidirectional, orthotropic or multiaxial alignment of the reinforcement fibres, which are held together by thermoplastic binding filaments.

5. Apparatus for carrying out the process according to Claim 1, comprising a high-pressure chamber (13), a seal gap (12) for the introduction of a fibrous formed body, a moulding nozzle (15) and a haul-off (16) for discharge of the continuous moulded body, wherein the seal gap (12) is connected to a chamber (10) which is completely filled with melt and is under atmospheric pressure or slight overpressure, and wherein furthermore polymer is added under pressure through line (14), excess polymer is removed through line (11), wherein the fibrous formed body is introduced through the gap (12) into the high-pressure chamber (13) and the gap (12) is sealed by a drag flow of the polymer melt.

## Revendications

1. Procédé de production de corps de forme à partir de corps sans fin formés de fibres de renforcement et imprégnés de matières synthétiques thermoplastiques, caractérisé en ce qu'on fait passer le corps formé de fibres de renforcement sans écartement des fibres et en entretenant une pression de 1 à 800 bars sur une distance d'au moins 300 mm à travers une masse fondue de la matière thermoplastique.

2. Procédé suivant la revendication 1, caractérisé en ce que les corps imprégnés de matières synthétiques thermoplastiques sont des bandes, des corps plans minces ou des profilés de matières composites, de matières synthétiques thermoplastiques et de fibres de renforcement.

3. Procédé suivant la revendication 1, caractérisé en ce que les corps formés de fibres de renforcement sont des rovings, des filés, des fils retors, des câbles ou des corps textiles (tissus, tricots et tulles).

4. Procédé suivant la revendication 1, caractérisé en ce que les corps en fibres de renforcement sont des matières textiles à agencement unidirectionnel, orthotrope ou multi-axial des fils de renforcement qui sont maintenus assemblés par des fils thermoplastiques de liaison.

5. Dispositif pour la mise en oeuvre du procédé suivant la revendication 1, comprenant une chambre (13) à haute pression, une fente étanche (12) permettant l'introduction d'un corps de fibres, une filière (15) de formage et un système de décharge (16) pour la sortie du corps de forme sans fin, la fente étanche (12) étant en liaison avec un espace (10) entièrement rempli de matière en fusion, qui se trouve au-dessous de la pression atmosphérique ou en légère surpression, et dans lequel en outre du polymère sous pression est introduit par un conduit (14), le polymère en excès est éliminé par un conduit (11), le corps de fibres étant introduit par la fente (12) dans l'espace (13) sous haute pression et la fente (12) étant rendue étanche par un courant porteur de la matière polymérisée en fusion.
